(19) Europäisches Patentamt
European Patent Office
Office européen des brevets

(11) **EP 4 478 085 A1**

(12) **EUROPEAN PATENT APPLICATION**
published in accordance with Art. 153(4) EPC

(43) Date of publication:
**18.12.2024 Bulletin 2024/51**

(21) Application number: **23749651.8**

(22) Date of filing: **26.01.2023**

(51) International Patent Classification (IPC):
**G01S 7/4863** (2020.01)   **G01C 3/06** (2006.01)
**G01S 17/89** (2020.01)   **G01S 17/10** (2020.01)

(52) Cooperative Patent Classification (CPC):
**G01C 3/06; G01S 7/4863; G01S 17/89;** G01S 17/10

(86) International application number:
**PCT/JP2023/002434**

(87) International publication number:
**WO 2023/149335 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2022 JP 2022017291**

(71) Applicant: **Sony Group Corporation
Tokyo 108-0075 (JP)**

(72) Inventors:
• **NISHI, Tomohiro
Tokyo 108-0075 (JP)**
• **YOKOKAWA, Masatoshi
Tokyo 108-0075 (JP)**
• **SAKURAI, Yuta
Tokyo 108-0075 (JP)**

(74) Representative: **2SPL Patentanwälte PartG mbB
Landaubogen 3
81373 München (DE)**

(54) **RANGING DEVICE, AND RANGING METHOD**

(57)    A distance measuring device according to an embodiment includes: a distance measuring section that measures depth information indicating a distance to an object within a distance measurement range expanding in a first direction and a second direction perpendicular to the first direction for each of strip regions including a plurality of pixels arranged at least in the first direction; and a calculation section that generates a depth image of the distance measurement range on a basis of the depth information for each of the pixels measured for each of the strip regions; wherein positions of boundaries between strip regions adjacent in the first direction are different between a plurality of pixel lines extending in the first direction and arranged in the second direction, and the calculation section corrects a pixel value of a pixel in another pixel line in the plurality of pixel lines on a basis of a pixel value of one of two pixels sandwiching a boundary formed by the two strip regions adjacent in the first direction.

FIG.11

EP 4 478 085 A1

**Description**

Field

The present disclosure relates to a distance measuring device and a distance measuring method.

Background

In recent years, a distance image sensor that measures a distance by a time-of-flight (TOF) method (hereinafter, referred to as TOF sensor) has attracted attention. For example, there is a TOF sensor that is manufactured by using a complementary metal oxide semiconductor (CMOS) semiconductor integrated circuit technique and that measures a distance to an object by using a plurality of light receiving elements arranged in a planar manner.

The TOF sensor includes a direct type TOF sensor and an indirect type TOF sensor. For example, in a direct type TOF sensor (hereinafter, also referred to as dTOF sensor), a time from when a light source emits light to when reflected light thereof (hereinafter, also referred to as echo) is incident on a SPAD (hereinafter, referred to as flight time) is measured a plurality of times as a physical quantity, and a distance to an object is identified on the basis of a histogram of physical quantities generated from the measurement results.

Citation List

Patent Literature

Patent Literature 1: JP 2021-128084 A
Patent Literature 2: JP 2004-271291 A
Patent Literature 3: JP H8-287736 A

Summary

Technical Problem

In a distance measuring method in which light reflected by an object is measured as a physical quantity, however, when there is an object having a high reflectance in a view angle, flare may occur due to reflected light from the object regardless of the presence or absence of a light source. In that case, a true boundary position of the object cannot be identified, which may decrease distance measurement accuracy.

Therefore, the present disclosure proposes a distance measuring device and a distance measuring method capable of inhibiting a decrease in distance measurement accuracy.

Solution to Problem

In order to solve the above problem, a distance measuring device according to one embodiment of the present disclosure includes: a distance measuring section that measures depth information indicating a distance to an object within a distance measurement range expanding in a first direction and a second direction perpendicular to the first direction for each of strip regions including a plurality of pixels arranged at least in the first direction; and a calculation section that generates a depth image of the distance measurement range on a basis of the depth information for each of the pixels measured for each of the strip regions; wherein positions of boundaries between strip regions adjacent in the first direction are different between a plurality of pixel lines extending in the first direction and arranged in the second direction, and the calculation section corrects a pixel value of a pixel in a pixel line different from a pixel line including two strip regions adjacent in the first direction in the plurality of pixel lines on a basis of a pixel value of one of two pixels sandwiching a boundary formed by the two strip regions.

Brief Description of Drawings

FIG. 1 is a block diagram depicting a schematic configuration example of a ToF sensor serving as a distance measuring device according to a first embodiment.

FIG. 2 depicts an optical system of the ToF sensor according to the first embodiment.

FIG. 3 is a block diagram depicting a schematic configuration example of a light receiving section according to the first embodiment.

FIG. 4 is a block diagram depicting a schematic configuration example of a light receiving section according to a variation of the first embodiment.

FIG. 5 is a schematic diagram depicting a schematic configuration example of a strip region according to the first embodiment.

FIG. 6 is a circuit diagram depicting a schematic configuration example of a SPAD pixel according to the first embodiment.

FIG. 7 is a block diagram depicting a more detailed configuration example of a SPAD addition section according to the first embodiment.

FIG. 8 depicts an example of a true boundary position (contour) of an object and a flare occurrence pixel in a case of occurrence of flare.

FIG. 9 is a schematic diagram depicting an example of a method of identifying a true boundary position of an object according to the first embodiment.

FIG. 10 is a flowchart depicting an example of a contour correction operation according to the first embodiment.

FIG. 11 depicts flare determination in Step S103 in FIG. 10.

FIG. 12 depicts search for a boundary pixel pair candidate in which a boundary matches a true boundary position of an object in boundary position prediction in Step S104 in FIG. 10.

FIG. 13 depicts identification of the true boundary position of the object in the boundary position prediction in Step S104 in FIG. 10.

FIG. 14 depicts an example of an offset allocated to each line for each time according to a second embodiment.

FIG. 15 depicts a method of adjusting the true boundary position of the object on the basis of an optical flow calculated from a past frame according to a third embodiment.

FIG. 16 is a block diagram depicting a hardware configuration example of a distance measuring device according to an embodiment of the present disclosure.

FIG. 17 is a block diagram depicting an example of schematic configuration of a vehicle control system.

FIG. 18 is a diagram of assistance in explaining an example of installation positions of an outside-vehicle information detecting section and an imaging section.

Description of Embodiments

Embodiments of the present disclosure will be described in detail below with reference to the drawings. Incidentally, in the following embodiments, the same reference signs are attached to the same parts, so that duplicate description will be omitted.

In addition, the present disclosure will be described in accordance with the following item order.

1. First Embodiment
1.1 Distance Measuring Device (TOF Sensor)
1.2 Optical System
1.3 Light Receiving Section
1.3.1 Variation of Light Receiving Section
1.4 Strip Region
1.5 SPAD Pixel
1.6 Schematic Operation Example of SPAD Pixel
1.7 SPAD Addition Section
1.8 Sampling Cycle
1.9 Decrease in Distance Measurement Accuracy Due to Flare
1.10 Method of Identifying True Boundary Position of Object
1.11 Example of Contour Correction Operation
1.12 Conclusion
2. Second Embodiment
3. Third Embodiment
4. Hardware Configuration
5. Example of Application to Mobile Body

1. First Embodiment

First, a first embodiment will be described in detail below with reference to the drawings.

1.1 Distance Measuring Device (TOF Sensor)

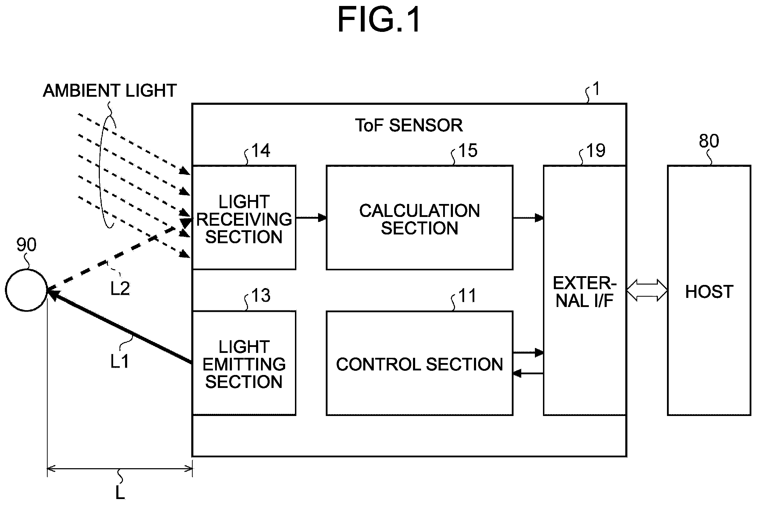

FIG. 1 is a block diagram depicting a schematic configuration example of a TOF sensor serving as a distance measuring device according to the embodiment. As depicted in FIG. 1, the TOF sensor 1 includes a control section 11, a light emitting section 13, a light receiving section 14, a calculation section 15, and an external interface (I/F) 19.

The control section 11 includes, for example, an information processing device such as a central processing unit (CPU), and controls each section of the TOF sensor 1.

The external I/F 19 may be, for example, a communication adapter for establishing communication with an external host 80 via a communication network conforming to any standard such as a controller area network (CAN), a local interconnect network (LIN), and FlexRay (registered trademark) in addition to a wireless local area network (LAN) and a wired LAN.

Here, for example, when the TOF sensor 1 is mounted on an automobile or the like, the host 80 may be an engine control unit (ECU) mounted on the automobile or the like. In addition, when the TOF sensor 1 is mounted on an autonomous mobile body, the host 80 may be a control device or the like that controls the autonomous mobile body. The autonomous mobile body includes an autonomous mobile robot such as a domestic pet robot, a robot cleaner, an unmanned aircraft, and a following conveyance robot.

The light emitting section 13 includes, for example, one or a plurality of semiconductor laser diodes serving as a light source, and emits a pulsed laser beam L1 having a predetermined time width at a predetermined cycle (also referred to as light emission cycle). In addition, the light emitting section 13 emits the laser beam L1 having a time width of one nanosecond (ns) at a cycle of one megahertz (MHz), for example. For example, when an object 90 is within a distance measurement range, the laser beam L1 emitted from the light emitting section 13 is reflected by the object 90, and incident on the light receiving section 14 as reflected light L2.

Although details will be described later, the light receiving section 14 includes, for example, a plurality of single photon avalanche diode (SPAD) pixels arranged in a two-dimensional lattice pattern, and outputs information on the number of SPAD pixels that detect incidence of a photon (hereinafter, referred to as detection number) after light emission of the light emitting section 13 (for example, corresponding to number of detection signals to be described later). For example, the light receiving section 14 detects incidence of a photon at a predetermined sampling cycle for one light emission of the light emitting section 13, and outputs the detection number.

Note, however, that pixels constituting the TOF sensor 1 according to the embodiment are not limited to the SPAD pixels that detect the presence or absence of incidence of a photon, and may be pixels that outputs pixel signals having an amplitude in accordance with an amount of incident light (also referred to as gradation pixels).

The calculation section 15 aggregates detection numbers output from the light receiving section 14 for each of a plurality of SPAD pixels (for example, corresponding to one or plurality of macro pixels to be described later). The calculation section 15 creates a histogram on the basis of a pixel value obtained by the aggregation. In the histogram, a horizontal axis represents a flight time, and a vertical axis represents a cumulative pixel value. For example, the calculation section 15 determines a pixel value by aggregating the detection numbers at a predetermined sampling frequency for one light emission of the light emitting section 13. The calculation section 15 repeats the operation for a plurality of light emissions of the light emitting section 13. The calculation section 15 creates a histogram in which a horizontal axis (bin of histogram) represents a sampling cycle corresponding to a flight time, and a vertical axis represents a cumulative pixel value obtained by accumulating pixel values determined in respective sampling cycles.

In addition, the calculation section 15 performs predetermined filter processing on the created histogram. The calculation section 15 then identifies a flight time when the cumulative pixel value reaches the peak from the histogram after the filter processing. Here, the pixel value in the description is depth information that can indicate a distance to an object within the distance measurement range. The cumulative pixel value is depth information indicating a likely distance to an object within the distance measurement range. Then, the calculation section 15 generates a depth image indicating a distance from the TOF sensor 1 or a device mounted therewith to the object 90 within the distance measurement range on the basis of the identified flight time. Incidentally, the depth image calculated by the calculation section 15 may be output to the host 80 or the like via the external I/F 19, for example.

1.2 Optical System

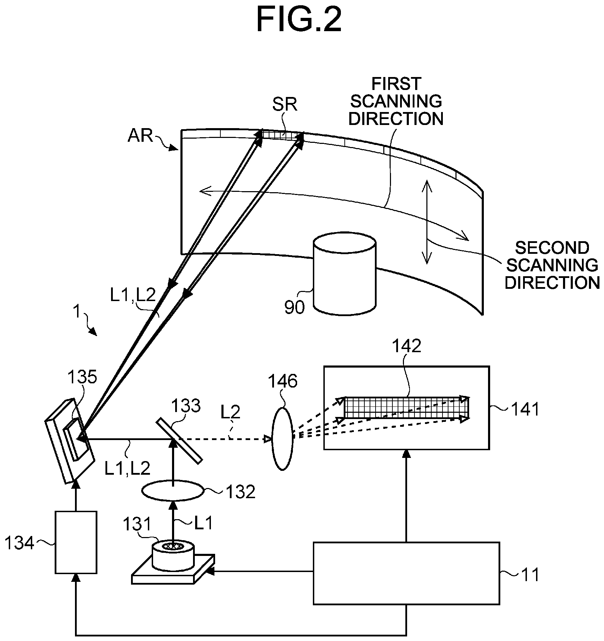

FIG. 2 depicts an optical system of the TOF sensor according to the embodiment. FIG. 2 depicts a so-called scan type optical system that horizontally scans a view angle of the light receiving section 14.

As depicted in FIG. 2, the TOF sensor 1 includes, as an optical system, a light source 131, a collimator lens 132, a half mirror 133, a galvanometer mirror 135, a light receiving lens 146, and a pixel array section 141. For example, the light emitting section 13 in FIG. 1 includes the light source 131, the collimator lens 132, the half mirror 133, and the galvanometer mirror 135. In addition, for example, the light receiving section 14 in FIG. 1 includes the light receiving lens 146 and the pixel array section 141.

In the configuration in FIG. 2, the laser beam L1 emitted from the light source 131 is converted into rectangular parallel light with an intensity spectrum of a cross section elongated in a vertical direction by the collimator lens 132, and is then incident on the half mirror 133. The half mirror 133 reflects a part of the incident laser beam L1. The laser beam L1 reflected by the half mirror 133 is incident on the galvanometer mirror 135. The galvanometer mirror 135 is made to horizontally or vertically vibrate with a predetermined rotation axis as a vibration center by a driving section 134 that operates under the control of the control section 11, for example. This causes the laser beam L1 to be scanned such that a view angle SR of the laser beam L1 reflected by the galvanometer mirror 135 is scanned within a distance measurement range AR in a manner of reciprocating in a first scanning direction (for example, horizontal direction) or a second scanning direction (for example, vertical direction). Incidentally, a micro electro mechanical system (MEMS), a micromotor, and the like can be used for the driving section 134.

In scanning the distance measurement range AR, control may be performed such that the entire distance measurement range AR is scanned by switching a scanning line (corresponding to pixel line in which pixels are arranged) (hereinafter, simply referred to as line) of the view angle SR (for example inclining rotation axis of galvanometer mirror 135 at predetermined angle) for each forward path or backward path. In that case, the first scanning direction may be a main scanning direction or a sub-scanning direction. When the first scanning direction is the main scanning direction, the second scanning direction may be the sub-scanning direction. When the first scanning direction is the sub-scanning direction, the second scanning direction may be the main scanning direction.

The laser beam L1 reflected by the galvanometer mirror 135 is reflected by the object 90 within the distance measurement range AR, and is incident on the galvanometer mirror 135 as the reflected light L2. A part of the reflected light L2 incident on the galvanometer mirror 135 is transmitted through the half mirror 133 to be incident on the light receiving lens 146. An image of the part is thereby formed in a strip-shaped rectangular region (hereinafter, also referred to as strip region) 142 in the pixel array section 141. Therefore, a depth image of the entire distance measurement range AR is generated by joining depth images acquired at a predetermined cycle from the strip region 142. Incidentally, the strip region 142 may be the entire pixel array section 141 or a part thereof.

As described above, for example, the light emitting section 13, the light receiving section 14, and the control section 11 constitute a distance measuring section that measures depth information for each strip region 142 including a plurality of pixels arranged at least in the first scanning direction. The depth information indicates a distance to the object 90 within the distance measurement range AR expanding in the first scanning direction and the second scanning direction perpendicular to the first scanning direction. In addition, the calculation section 15 generates a depth image of the distance measurement range AR on the basis of the depth information for each pixel measured for each strip region 142.

## 1.3 Light Receiving Section

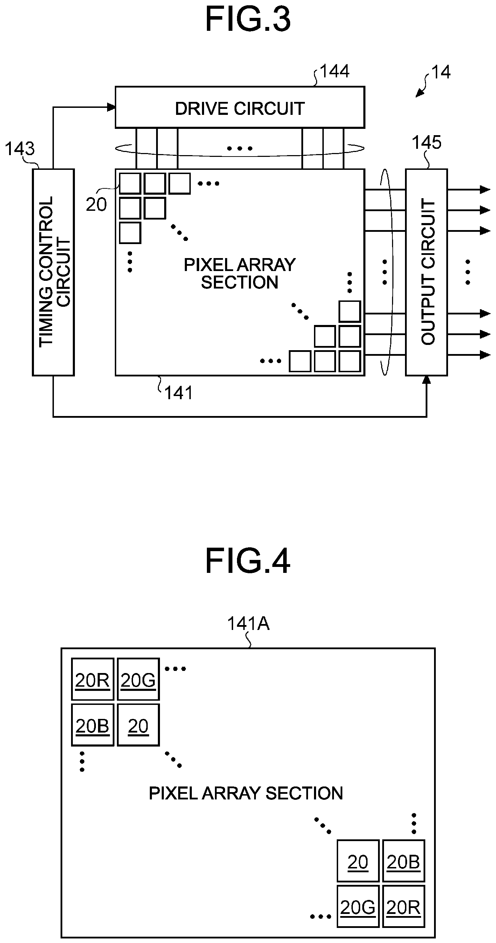

FIG. 3 is a block diagram depicting a schematic configuration example of the light receiving section according to the embodiment. As depicted in FIG. 3, the light receiving section 14 includes the pixel array section 141, a timing control circuit 143, a drive circuit 144, and an output circuit 145.

The pixel array section 141 includes a plurality of SPAD pixels 20 arranged in a two-dimensional lattice pattern. Pixel drive lines (in vertical direction in figure) are connected to the plurality of SPAD pixels 20 for respective columns. Output signal lines (right and left direction in figure) are connected to the plurality of SPAD pixels 20 for respective rows. A pixel drive line is connected to an output end of each column of the drive circuit 144 at one end. An output signal line is connected to an input end of each row of the output circuit 145 at one end.

In the embodiment, the reflected light L2 is detected by using all or a part of the pixel array section 141. The region (strip region 142) used in the pixel array section 141 may have a vertically elongated rectangular shape as an image of the reflected light L2, which is formed in the pixel array section 141 when the entire laser beam L1 is reflected as the reflected light L2. Note, however, that the strip region 142 is not limited thereto. The strip region 142 may be varied into a region larger or smaller than the image of the reflected light L2 formed in the pixel array section 141.

The drive circuit 144 includes a shift register and an address decoder. The drive circuit 144 drives the respective SPAD pixels 20 of the pixel array section 141 simultaneously for all pixels or in units of columns, for example. Then, at least, the drive circuit 144 includes a circuit that applies a quench voltage V_QCH to be described later in each SPAD pixel 20 in a selected column in the pixel array section 141, and includes a circuit that applies a selection control voltage V_SEL to be described later in each SPAD pixel 20 in the selected column. Then, the drive circuit 144 selects a SPAD pixel 20 to be used for detecting incidence of a photon in units of columns by applying the selection control voltage V_SEL to a pixel drive line for a column to be read out.

A signal V_OUT output from each SPAD pixel 20 of a column selectively scanned by the drive circuit 144 (referred to as detection signal) is input to the output circuit 145 through each of the output signal lines. The output circuit 145 outputs the detection signal V_OUT input from each SPAD pixel 20 to a SPAD addition section 40 provided for each macro pixel to be described later.

The timing control circuit 143 includes a timing generator that generates various kinds of timing signals. The timing control circuit 143 controls the drive circuit 144 and the output circuit 145 on the basis of the various kinds of timing signals generated by the timing generator.

1.3.1 Variation of Light Receiving Section

Incidentally, although FIG. 3 depicts a case where the SPAD pixels 20 constitute all pixels arranged in a matrix in the pixel array section 141, this is not a limitation. For example, as in a variation in FIG. 4, gradation pixels 20R, 20G, and 20B and a SPAD pixel 20 may be mixed and arranged in the pixel array section 141. The gradation pixels 20R, 20G, and 20B output respective amounts of incident light of three primary colors of RGB as gradation signals. In that case, a color image can be acquired in addition to a depth image. In addition, a gradation pixel that detects an amount of incident light of infrared light and near-infrared light may be mixed in addition to the gradation pixels that detect an amount of light of the three primary colors of RGB. Incidentally, a configuration of reading out a gradation signal from a gradation pixel may be similar to that of a usual image sensor.

1.4 Strip Region

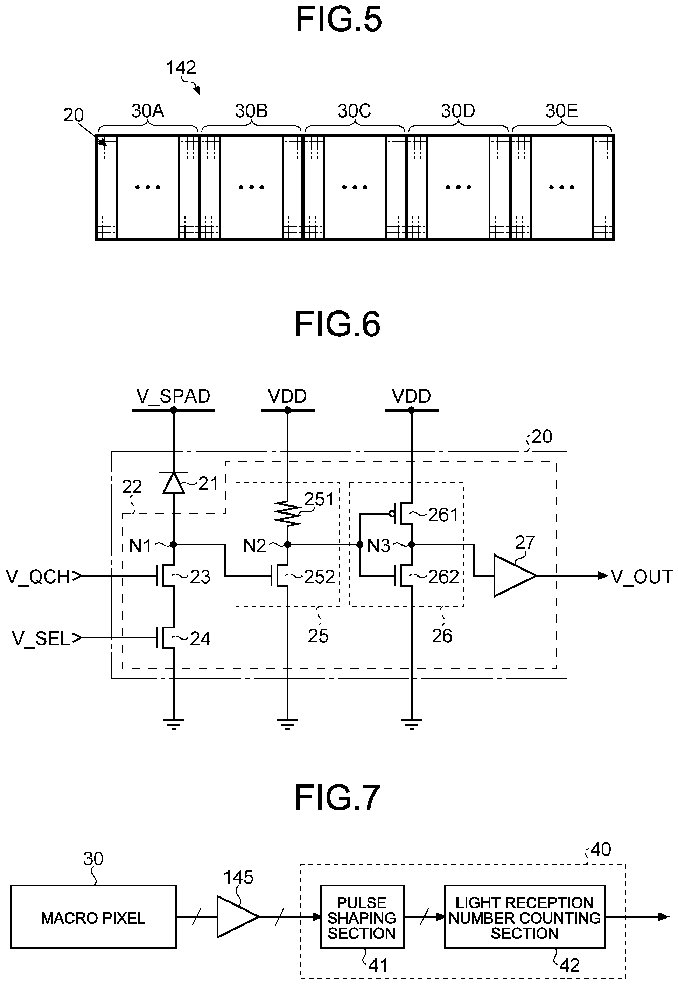

FIG. 5 is a schematic diagram depicting a schematic configuration example of the strip region according to the embodiment. As depicted in FIG. 5, the strip region 142 has, for example, a configuration in which a plurality of SPAD pixels 20 is arranged in a two-dimensional lattice pattern. The plurality of SPAD pixels 20 is grouped into a plurality of macro pixels 30 including a predetermined number of SPAD pixels 20 arranged in a row and/or column direction. A region obtained by connecting outer edges of a SPAD pixel 20 located on the outermost periphery of each macro pixel 30 has a predetermined shape (for example, rectangle).

In the embodiment, the strip region 142 includes, for example, a plurality of macro pixels 30 arranged in the horizontal direction (corresponding to row direction). In the example in FIG. 5, the strip region 142 is divided into five macro pixels 30A to 30E. A macro pixel 30A located on the leftmost side corresponds to, for example, the leftmost 1/5 region in the view angle SR of the strip region 142. A macro pixel 30B on the right thereof corresponds to, for example, the second 1/5 region from the left in the view angle SR. A macro pixel 30C on the right thereof corresponds to, for example, the third 1/5 region from the left in the view angle SR. A macro pixel 30D on the right thereof corresponds to, for example, the fourth 1/5 region from the left in the view angle SR. The rightmost macro pixel 30E corresponds to, for example, the rightmost 1/5 region in the view angle SR.

Incidentally, although, in the example, a case where the strip region 142 has expansion of $5 \times 1$ of five pixels in the horizontal direction (corresponding to first scanning direction to be described later in example) and one pixel in the vertical direction (corresponding to second scanning direction to be described later in example) has been depicted, this is not a limitation. Variations may be made. For example, the strip region 142 may have expansion of two or more pixels in the vertical direction.

1.5 SPAD Pixel

FIG. 6 is a circuit diagram depicting a schematic configuration example of the SPAD pixel according to the embodiment. As depicted in FIG. 6, the SPAD pixel 20 includes a photodiode 21 and a readout circuit 22. The photodiode 21 serves as a light receiving element. The readout circuit 22 detects incidence of a photon on the photodiode 21. When a photon is incident on the photodiode 21 with a reverse bias voltage V_SPAD equal to or higher than a breakdown voltage applied between an anode and a cathode of the photodiode 21, an avalanche current is generated.

The readout circuit 22 includes a quench resistor 23, a digital converter 25, an inverter 26, a buffer 27, and a selection transistor 24. The quench resistor 23 includes, for example, an N-type metal oxide semiconductor field effect transistor (MOSFET) (hereinafter, referred to as NMOS transistor). A drain of the quench resistor 23 is connected to an anode of the photodiode 21, and a source of the quench resistor 23 is grounded via the selection transistor 24. In addition, the quench voltage V_QCH is applied from the drive circuit 144 to a gate of the NMOS transistor constituting the quench resistor 23 via a pixel drive line. The quench voltage V_QCH is preset for causing the NMOS transistor to act as a quench resistor.

In the embodiment, the photodiode 21 is a SPAD. The SPAD is an avalanche photodiode that operates in a Geiger mode at the time when a reverse bias voltage equal to or higher than a breakdown voltage is applied between an anode and a cathode of the SPAD, and can detect incidence of one photon.

The digital converter 25 includes a resistor 251 and an NMOS transistor 252. A drain of the NMOS transistor 252 is connected to a power supply voltage VDD via the resistor 251, and a source of the NMOS transistor 252 is grounded. In addition, a voltage at a connection point N1 between the anode of the photodiode 21 and the quench resistor 23 is applied to the gate of the NMOS transistor 252.

The inverter 26 includes a P-type MOSFET (hereinafter, referred to as PMOS transistor) 261 and an NMOS transistor 262. A drain of the PMOS transistor 261 is connected to the power supply voltage VDD, and a source of the PMOS transistor 261 is connected to a drain of the NMOS transistor 262. The drain of the NMOS transistor 262 is connected to the source of the PMOS transistor 261, and a source of the NMOS transistor 262 is grounded. A voltage at a connection point N2 between the resistor 251 and the drain of the NMOS transistor 252 is applied to each of the gate of the PMOS transistor 261 and the gate of the NMOS transistor 262. Output of the inverter 26 is input to the buffer 27.

The buffer 27 is a circuit for impedance conversion. When an output signal is input from the inverter 26, the buffer 27 performs impedance conversion on the input output signal, and outputs the output signal as the detection signal V_OUT.

The selection transistor 24 is, for example, an NMOS transistor. A drain of the selection transistor 24 is connected to a source of an NMOS transistor constituting the quench resistor 23, and a source of the selection transistor 24 is grounded. The selection transistor 24 is connected to the drive circuit 144. When the selection control voltage V_SEL from the drive circuit 144 is applied to the gate of the selection transistor 24 via a pixel drive line, the selection transistor 24 changes from an off-state to an on-state.

1.6 Schematic Operation Example of SPAD Pixel

The readout circuit 22 in FIG. 6 operates as follows, for example. That is, first, the reverse bias voltage V_SPAD equal to or higher than a breakdown voltage is applied to the photodiode 21 during a period when the selection control voltage V_SEL is applied from the drive circuit 144 to the selection transistor 24 and the selection transistor 24 is in the on-state. This permits operation of the photodiode 21.

In contrast, the reverse bias voltage V_SPAD is not applied to the photodiode 21 during a period when the selection control voltage V_SEL is not applied from the drive circuit 144 to the selection transistor 24 and the selection transistor 24 is in the off-state. The operation of the photodiode 21 is thus prohibited.

When a photon is incident on the photodiode 21 at the time when the selection transistor 24 is in the on-state, an avalanche current is generated in the photodiode 21. This causes the avalanche current to flow through the quench resistor 23, and increases the voltage at the connection point N1. When the voltage at the connection point N1 becomes higher than the on-voltage of the NMOS transistor 252, the NMOS transistor 252 is brought into the on-state, and the voltage at the connection point N2 changes from the power supply voltage VDD to 0 V. Then, when the voltage at the connection point N2 changes from the power supply voltage VDD to 0 V, the PMOS transistor 261 is brought from the off-state to the on-state while the NMOS transistor 262 is brought from the on-state to the off-state. The voltage at a connection point N3 changes from 0 V to the power supply voltage VDD. As a result, a high-level detection signal V_OUT is output from the buffer 27.

Thereafter, when the voltage at the connection point N1 continues to increase, the voltage applied between the anode and the cathode of the photodiode 21 becomes smaller than the breakdown voltage, which stops the avalanche current, and decreases the voltage at the connection point N1. Then, when the voltage at the connection point N1 becomes lower than the on-voltage of an NMOS transistor 452, the NMOS transistor 452 is brought into the off-state, and output of the detection signal V_OUT from the buffer 27 stops (low level).

As described above, the readout circuit 22 outputs the high-level detection signal V_OUT during a period from the timing when a photon is incident on the photodiode 21, the avalanche current is generated, and thereby the NMOS transistor 452 is brought into the on-state to the timing when the avalanche current stops and the NMOS transistor 452 is brought into the off-state. The output detection signal V_OUT is input to the SPAD addition section 40 for each macro pixel 30 via the output circuit 145. Therefore, detection signals V_OUT corresponding to the number (detection number) of the SPAD pixels 20 in which incidence of a photon is detected among a plurality of SPAD pixels 20 constituting one macro pixel 30 are input to each SPAD addition section 40.

1.7 SPAD Addition Section

FIG. 7 is a block diagram depicting a more detailed configuration example of the SPAD addition section according to the embodiment. Incidentally, the SPAD addition section 40 may be included in the light receiving section 14, or may be included in the calculation section 15.

As depicted in FIG. 7, the SPAD addition section 40 includes, for example, a pulse shaping section 41 and a light reception number counting section 42.

The pulse shaping section 41 shapes a pulse waveform of the detection signal V_OUT input from the pixel array section 141 via the output circuit 145 into a pulse waveform having a time width in accordance with an operation clock of the SPAD addition section 40.

The light reception number counting section 42 counts the number (detection number) of SPAD pixels 20 in which incidence of a photon has been detected for each sampling cycle by counting the detection signals V_OUT input from a corresponding macro pixel 30 for each sampling cycle, and outputs the counted value as a pixel value of the macro pixel 30.

1.8 Sampling Cycle

Here, in the sampling cycle, a time (flight time) from when the light emitting section 13 emits the laser beam L1 to when the light receiving section 14 detects incidence of a photon is measured. A cycle shorter than a light emission cycle of the light emitting section 13 is set as the sampling cycle. For example, a flight time of a photon emitted from the light emitting section 13 and reflected by the object 90 can be calculated with a higher time resolution by further shortening the sampling cycle. This means that a distance to the object 90 can be calculated with a higher distance measurement resolution by further increasing a sampling frequency.

For example, a flight time until the light emitting section 13 emits the laser beam L1, the laser beam L1 is reflected by the object 90, and the reflected light L2 is incident on the light receiving section 14 is defined as t. Since the light speed C is constant (C ≈ 300,000,000 meters (m)/second (s)), a distance L to the object 90 can be calculated as in Expression (1) below.

$$L = C \times t/2 \tag{1}$$

Then, when the sampling frequency is 1 GHz, the sampling cycle is one nanosecond (ns). In that case, one sampling cycle corresponds to 15 centimeters (cm). This indicates that a distance measurement resolution in a case of a sampling frequency of 1 GHz is 15 cm. In addition, when the sampling frequency is doubled to 2 GHz, the sampling cycle is 0.5 nanoseconds (ns). One sampling cycle thus corresponds to 7.5 centimeters (cm). This indicates that, when the sampling frequency is doubled, the distance measurement resolution can be doubled. As described above, the distance to the object 90 can be calculated more accurately by increasing the sampling frequency and shortening the sampling cycle.

Incidentally, in the description, a case where a so-called active type distance measuring method is adopted has been depicted. In the active type distance measurement method, a distance to the object 90 is measured by observing the reflected light L2 of the laser beam L1 emitted from the light emitting section 13. This is, however, not a limitation. For example, a so-called passive type distance measurement method may be adopted. In the passive type distance measurement method, a distance to the object 90 is measured by observing light emitted from sunlight and illumination.

1.9 Decrease in Distance Measurement Accuracy Due to Flare

In a distance measuring device as described above, when there is a highly reflective object (which may be, for example, light source that emits strong light) in the view angle SR, so-called flare may occur. In the occurrence of flare, not only a pixel (for example, corresponding to macro pixel 30) (hereinafter, simply referred to as pixel 30) in which an original image of an object is formed but pixels 30 around the pixel are saturated by scattered light of strongly reflected light from the object.

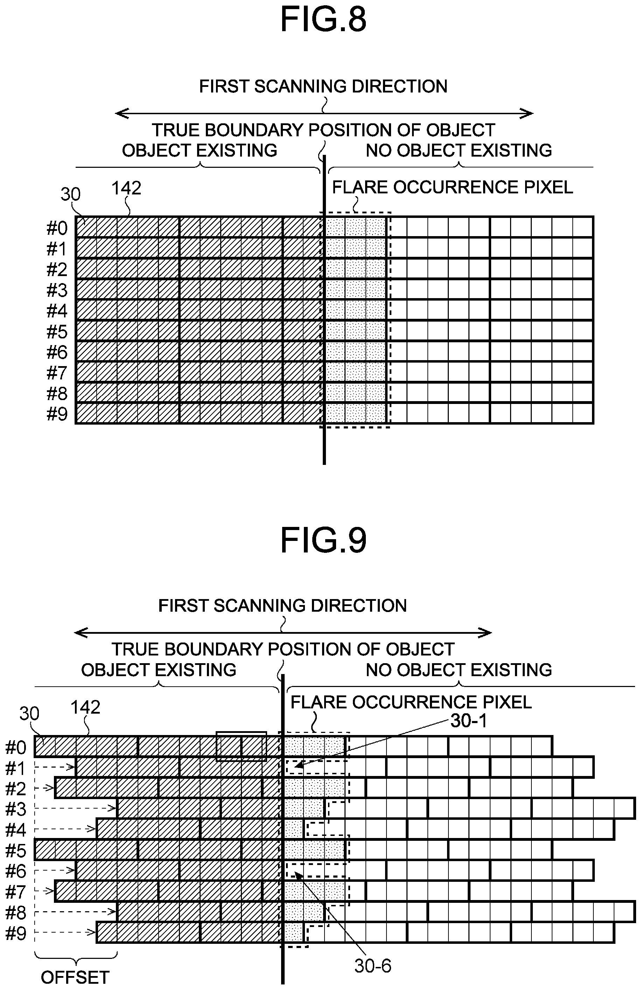

FIG. 8 depicts an example of a true boundary position (contour) of an object and a flare occurrence pixel in a case of occurrence of flare. Incidentally, FIG. 8 depicts a part (10 lines of lines #1 to #9) of a depth image on the basis of a histogram created by scanning the inside of the view angle SR including a highly reflective object for each line in the first scanning direction.

As depicted in FIG. 8, flare occurs over one or more pixels 30 from the true boundary position of the object toward a region where the object does not originally exist. Thus, the true boundary position of the object cannot be identified around the highly reflective object, which may decrease distance measurement accuracy.

Therefore, in the embodiment, the true boundary position of the object is identified or estimated (hereinafter, simply referred to as identification including estimation) by using scanning of the strip region 142 having a width in the scanning direction (in example, first scanning direction) along the width direction.

Specifically, in the above-described TOF sensor 1, a pixel 30 outside the strip region 142 is invalidated, or a pixel value of the pixel 30 is not used for generating the histogram even if the pixel 30 is validated, so that expansion of the flare is substantially limited within the strip region 142. Then, in the embodiment, the offset (also referred to as phase) of segmentation of the strip region 142 in the scanning direction (in example, first scanning direction) is shifted for each line by using such a configuration feature. This enables the boundary between strip regions 142 adjacent in the scanning direction and the true boundary position of the object to match each other in any of lines arranged in a direction (in example, second scanning direction) perpendicular to the scanning direction. The true boundary position of the object can thus be identified.

That is, when the boundary between strip regions 142 adjacent in the scanning direction and the true boundary position of the object match each other, an image of the object has been detected in the first place and flare does not occur in a strip region 142 including the image of the object. In a strip region 142 not including the image of the object, the laser beam L1 is not applied from the light emitting section 13 to the object at the time of detection, so that flare caused by the reflected light L2 from the object does not occur in the strip region 142.

Therefore, the true boundary position of the object can be identified by shifting the offset (phase) of segmentation of the strip region 142 in the scanning direction (in example, first scanning direction) for each line and referring to a pixel value obtained by two pixels 30 sandwiching the boundary between two strip regions 142 adjacent in the scanning direction at the time.

Then, a more accurate contour of the object can be identified by estimating the true boundary position in another line from the identified true boundary position of the object. A decrease in distance measurement accuracy can thus be inhibited.

Incidentally, in the description, the true boundary position of the object may be, for example, a true boundary position (for example, contour) of an image of the object formed on a light receiving surface of the pixel array section 141. In addition, when the boundary between strip regions 142 and the true boundary position of the object match each other, the true boundary position of the object may be included in a light receiving region of the SPAD pixel 20 on the side of the boundary between strip regions 142 on the side including the image of the object. Further, the offset for each line may be made by shifting timing when the control section 11 (see FIG. 1) starts to read out a pixel value from each line in the light receiving section 14 (for example, timing of vertical synchronization signal).

1.10 Method of Identifying True Boundary Position of Object

Next, a method of identifying a true boundary position of an object according to the embodiment will be described in detail with reference to a drawing.

FIG. 9 is a schematic diagram depicting an example of a method of identifying a true boundary position of an object according to the embodiment. Incidentally, FIG. 9 depicts a part (10 lines of lines #1 to #9) of a depth image on the basis of a histogram created by scanning the inside of the view angle SR including a highly reflective object for each line in the first scanning direction.

As depicted in FIG. 9, in the embodiment, the position of a starting point (for example, pixel 30 at left end) of each strip region 142 is shifted for each line. In other words, in the embodiment, a different offset is provided for each line for the scan start position of each line. In the example in which the strip region 142 has five pixels in the first scanning direction, offsets of five patterns from zeroth pixel to fourth pixel are cyclically allocated to five lines consecutive in the second scanning direction.

In that case, not an offset that increases or decreases pixel by pixel (that is, stepped offset) in the second scanning direction but a randomly assigned offset is allocated to the consecutive five lines. A trouble of being unable to identify the true boundary of the object in a case where the true boundary of the object is inclined with respect to the first scanning direction can be avoided, for example.

Boundaries between rectangular regions 142 not influenced by flare can be set all over the view angle SR by spatially (that is, for each line) shifting the position of the strip region 142. This can reduce the influence of flare occurring in the view angle SR and detect the contour of the object more accurately. A decrease in distance measurement accuracy can thus be inhibited.

This will be described with reference to an example in FIG. 9. Incidentally, in the example in FIG. 9, each of lines #0 to #4 and lines #5 to #9 constitutes one cycle. An offset of the same pattern is allocated to each of the lines #0 to #4 and the lines #5 to #9.

In the example in FIG. 9, the true boundary position of the object is located in a strip region 142 in each of the lines #0, #2, #3, and #4. In the line #1, the true boundary position of the object is located at the boundary between two adjacent strip regions 142. The same applies to the lines #5 to #9. Thus, in the lines #0, #2, #3, #4, #5, #7, #8, and #9, flare occurs on a side of a region of "no object existing" in a strip region 142 crossing the true boundary position of the object (flare occurrence pixel).

In contrast, in the lines #1 and #6 in which the true boundary position of the object is located at the boundary between two adjacent strip regions 142, no flare occurs in any of the two strip regions 142 sandwiching the true boundary position of the object. Specifically, no flare occurs in pixels 30-1 and 30-6 adjacent to the true boundary position of the object from the side of "no object existing". This indicates that the true boundary position of the object can be detected in the lines #1 and #6.

Then, in the embodiment, the contour of the object in the entire depth image is corrected by identifying two strip regions 142 that have correctly detected the true boundary position of the object and identifying the true boundary position of the object in another line from the boundary between the two identified strip regions 142.

1.11 Example of Contour Correction Operation

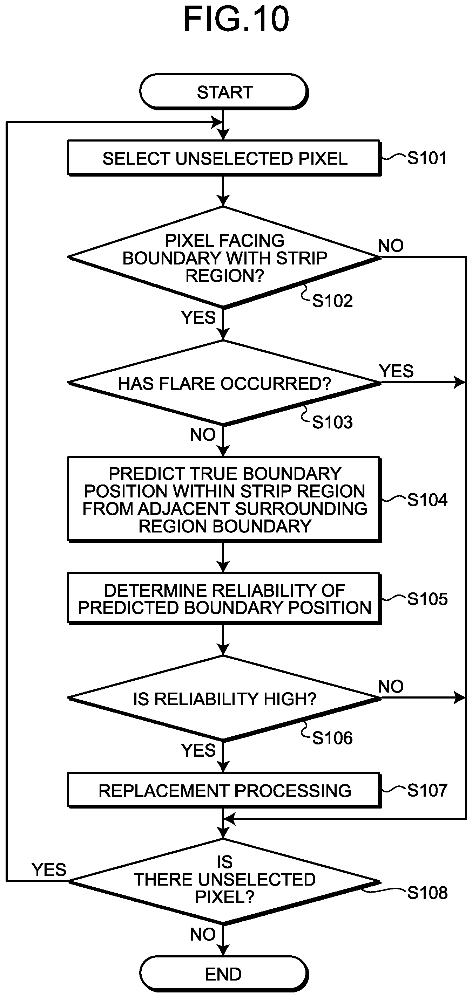

FIG. 10 is a flowchart depicting an example of a contour correction operation according to the embodiment. Incidentally, the contour correction operation in FIG. 10 may be processing executed on a depth image generated on the basis of a pixel value acquired by the light receiving section 14 (see FIG. 1). Note, however, that this is not a limitation. The contour correction operation may be executed on a histogram before the depth image is generated. In addition, for example, when the light receiving section 14 executes a signal processing section such as a digital signal processor (DSP) that generates a histogram and a depth image) from a pixel value, the signal processing section may execute the contour correction operation. The calculation section 15 may execute the contour correction operation. The calculation section 15 executes various kinds of calculations on the histogram or the depth image output from the light receiving section 14. In addition, when the calculation section 15 generates the histogram and the depth image on the basis of a pixel value output from the light receiving section 14, the calculation section 15 may execute the contour correction operation. Description will be given below on the assumption that the calculation section 15 executes the contour correction operation.

(Pixel Selection S101)

As depicted in FIG. 10, in the operation, the calculation section 15 first selects one unselected pixel 30 in a depth image (Step S101). For convenience of description, the pixel 30 selected in Step S101 is referred to as a selected pixel 30 or a selected pixel 30S. Various methods in which all pixels 30 in the depth image can be selected may be used as the selection method. The various methods include a so-called line scan method. In the line scan method, pixels 30 are selected one by one laterally in order from an upper left pixel 30 of the depth image, the selection shifts to the next line when the selection for one line is completed, and pixels 30 are similarly selected one by one in order from a pixel 30 at a left end.

(Boundary Pixel Determination S102)

Next, the calculation section 15 determines whether or not a selected pixel 30 is a pixel located at an end of the strip region 142 in the first scanning direction (in example, lateral direction along line) (that is, pixel facing boundary with adjacent strip region) (Step S102). When a fixed number of pixels are provided in the strip region 142 in the first scanning direction as in the example, whether or not the selected pixel 30 is located at the end of the strip region 142 in the first scanning direction can be determined by identifying what number pixel from a left end or a right end of each line the selected pixel 30 is. Note, however, that the method is not a limitation. Variations may be made.

(Flare Determination S103)

When the selected pixel 30 is not located at the end of the strip region 142 in the first scanning direction (NO in Step S102), the calculation section 15 proceeds to Step S108. In contrast, when the selected pixel 30 is located at the end of the strip region 142 in the first scanning direction (YES in Step S102), the calculation section 15 determines whether or not the strip region 142 including the selected pixel 30 is a strip region that can include a flare occurrence pixel (in other words, strip region that can include true boundary position of object) (Step S103). For example, when all the following first to third conditions are satisfied, the calculation section 15 may determine that the strip region 142 including the selected pixel 30 can include a flare occurrence pixel. Incidentally, under the following conditions, a first threshold may be the same as a third threshold, and a second threshold may be the same as a fourth threshold.

· First condition: both a pixel value of the selected pixel 30 and a pixel value of a pixel 30 adjacent to the selected pixel (hereinafter, referred to as adjacent pixel) 30 in the strip region 142 adjacent to the selected pixel 30 in a line direction are equal to or more than the preset first threshold
· Second condition: the difference between the pixel value of the selected pixel 30 and the pixel value of the adjacent pixel 30 is equal to or less than the preset second threshold
· Third condition: both pixel values of two pixels 30 sandwiching a boundary are equal to or less than the preset third threshold or the difference between the pixel values is equal to or more than the fourth threshold at the boundary, in the line direction of the strip region 142 including the selected pixel 30, opposite to the boundary faced by the selected pixel 30

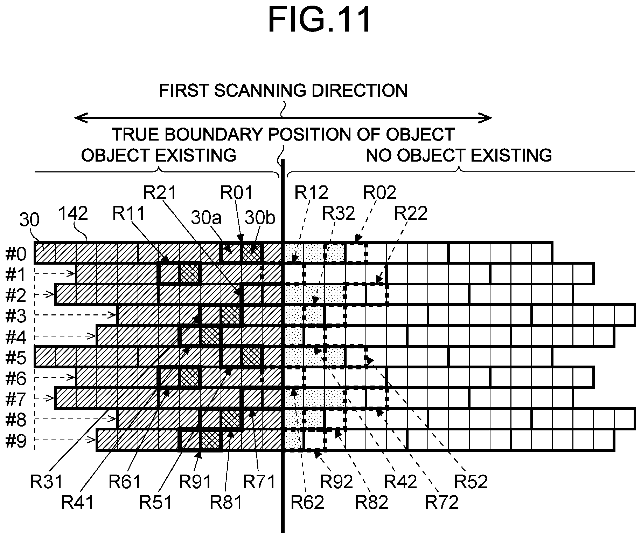

This will be described with reference to FIG. 11. Incidentally, an example in FIG. 11 is similar to the example in FIG. 9. In addition, in FIG. 11, for simplicity of description, two pixels sandwiching the boundary between two adjacent strip regions 142 in the line direction are referred to as a "boundary pixel pair". A left pixel 30 in each boundary pixel pair is referred to as a "pixel 30a". A right pixel 30 is referred to as a "pixel 30b".
In addition, in an example in FIG. 11, it is assumed that a right pixel 30b in each of a boundary pixel pair R01 of the line #0, a boundary pixel pair R11 of the line #1, a boundary pixel pair R21 of the line #2, a boundary pixel pair R31 of the line #3, a boundary pixel pair R41 of the line #4, a boundary pixel pair R51 of the line #5, a boundary pixel pair R61 of the line #6, a boundary pixel pair R71 of the line #7, a boundary pixel pair R81 of the line #8, and a boundary pixel pair R81 of the line #9 is a selected pixel 30 selected in processing on each line.

In the lines #0, #1, #3, #4, #5, #6, #8, and #9, both pixel values of pixels 30a and 30b constituting each of the left boundary pixel pairs R01, R11, R31, R41, R51, R61, R81, and R91 are equal to or more than the first threshold, and the difference between the pixel values is equal to or less than the second threshold. Then, the difference between pixel values of pixels 30a and 30b constituting right boundary pixel pairs R02, R12, R32, R42, R52, R62, R82, and R92 is equal to or more than the fourth threshold. In addition, in the lines #2 and #7, both pixel values of pixels 30a and 30b constituting each of the left boundary pixel pairs R21 and R71 are equal to or more than the first threshold, and the difference between the pixel values is equal to or less than the second threshold. Then, both pixel values of pixels 30a and 30b constituting the right boundary pixel pairs R22 and R72 are equal to or less than the third threshold.

Therefore, in Step S103, it is sequentially determined that a strip region 142 including each of a pixel 30b in the boundary pixel pair R01 of the line #0, a pixel 30b in the boundary pixel pair R11 of the line #1, a pixel 30b in the boundary pixel pair R21 of the line #2, a pixel 30b in the boundary pixel pair R31 of the line #3, a pixel 30b in the boundary pixel pair R41 of the line #4, a pixel 30b in the boundary pixel pair R51 of the line #5, a pixel 30b in the boundary pixel pair R61 of the line #6, a pixel 30b in the boundary pixel pair R71 of the line #7, a pixel 30b in the boundary pixel pair R81 of the line #8, and a pixel 30b in the boundary pixel pair R81 of the line #9 is a strip region that can include a flare occurrence pixel (in other words, strip region that can include true boundary position of object).

(Boundary Position Prediction S104)

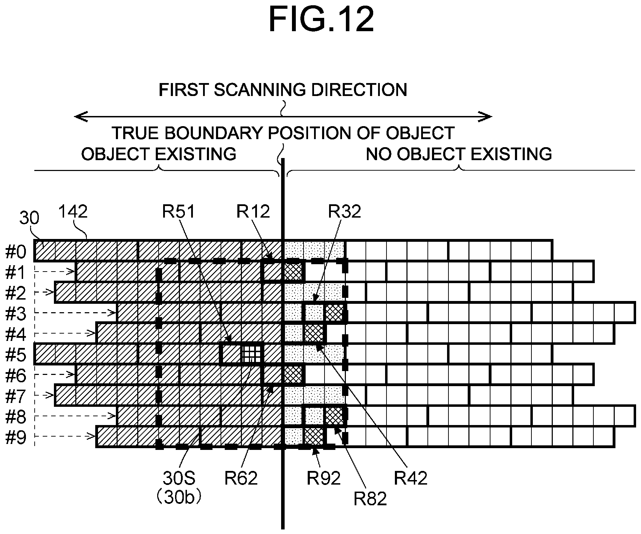

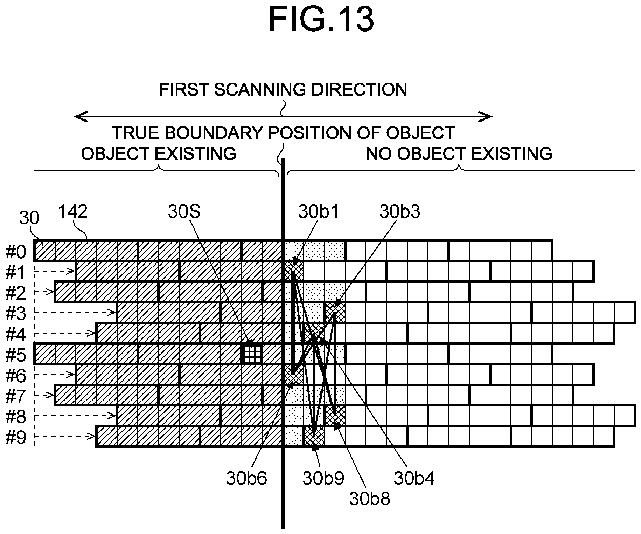

Next, the calculation section 15 identifies the true boundary position of the object on the basis of the strip region 142 that can include the flare occurrence pixel identified in Step S103 (Step S104). This will be described below with reference to FIGS. 12 and 13. Incidentally, in the following description, for the sake of clarity, it is assumed that the selected pixel 30 selected in immediately preceding Step S101 is the right pixel 30b (hereinafter, referred to as selected pixel 30S) in the boundary pixel pair R51 of the line #5.

. Search for Boundary Pixel Pair Candidate in Which Boundary Matches True Boundary Position of Object

FIG. 12 depicts a method of searching for a boundary pixel pair candidate in which the boundary matches the true boundary position of the object. As depicted in FIG. 12, in Step S104, the calculation section 15 first searches for a boundary pixel pair that satisfies all the above-described first to third conditions among boundary pixel pairs in upper and lower lines of the line #5 to be processed. Incidentally, in the example, the offsets of five patterns are cyclically set every five lines. A search range in the vertical direction (corresponding to second scanning direction) may include four lines of lines #1 to #4 above the line #5 and four lines of lines #6 to #9 below the line #5. In addition, the search range in the right and left direction (corresponding to first scanning direction) may include four pixels on the left side of the selected pixel 30S and four pixels on the right side of the selected pixel 30S. For example, a range surrounded by a thick broken line in FIG. 12 may be the search range of the calculation section 15. Note, however, that the line #5 is not required to be included in the search range.

As a result of the search, in an example in FIG. 12, the boundary pixel pair R12 of the line #1, the boundary pixel pair R32 of the line #3, the boundary pixel pair R42 of the line #4, the boundary pixel pair R62 of the line #6, the boundary pixel pair R82 of the line #8, and the boundary pixel pair R92 of the line #9 are searched for as boundary pixel pair candidates in which the boundary matches the true boundary position of the object. For convenience of description, the boundary pixel pairs searched for as candidates are hereinafter referred to as "candidate boundary pixel pairs".

. Identification of True Boundary Position of Object

When a boundary pixel pair candidate in which the boundary matches the true boundary position of the object is searched for as described above, the calculation section 15 next identifies the true boundary position of the object on the basis of the candidate searched for. FIG. 13 depicts a method of identifying the true boundary position of the object on the basis of the candidate searched for. As depicted in FIG. 13, the calculation section 15 first identifies a side on which the true boundary position of the object is located from the positional relation between the selected pixel 30S and the candidate boundary pixel pairs R12, R32, R42, R62, R82, and R92. In the example in FIG. 13, the candidate boundary pixel pairs R12, R32, R42, R62, R82, and R92 are located on the right side of the selected pixel 30S, so that the calculation section 15 determines that the true boundary position of the object is located on the right side of the selected pixel 30S.

When identifying the side where the true boundary position of the object is located as described above, the calculation section 15 selects a pixel 30 on the side where the true boundary position of the object is located in the candidate boundary pixel pair as a candidate of a pixel indicating the true boundary position of the object. For convenience of description, the candidate of a pixel indicating the true boundary position of the object is hereinafter referred to as a "candidate pixel". In the example in FIG. 13, since having determined that the true boundary position of the object is located on the right side of the selected pixel 30S, the calculation section 15 selects right pixels 30b in the candidate boundary pixel pairs R12, R32, R42, R62, R82, and R92 as candidate pixels 30b1, 30b3, 30b4, 30b6, 30b8, and 30b9.

Next, the calculation section 15 creates pairs of candidate pixels crossing a line to be processed from the selected candidate pixels, and connects the created pairs with straight lines. In the example in FIG. 13, the line #5 is to be processed, so that nine pairs of (30b1, 30b6), (30b1, 30b8), (30b1, 30b9), (30b3, 30b6), (30b3, 30b8), (30b3, 30b9), (30b4, 30b6), (30b4, 30b8), and (30b4, 30b9) are created and connected with straight lines.

When connecting candidate pixels constituting a pair with straight lines as described above, the calculation section 15 next identifies a straight line closest to the selected pixel 30S, and identifies the straight line as the true boundary position of the object. In the example in FIG. 13, a straight line connecting the candidate pixel 30b1 with the candidate pixel 30b6 among the straight lines is closest to the selected pixel 30S, so that the calculation section 15 identifies the straight line connecting the candidate pixel 30b1 with the candidate pixel 30b6 as the true boundary position of the object.

(Reliability Determination S105)

The description returns to the flowchart in FIG. 10. When identifying the true boundary position of the object as described above, the calculation section 15 next determines the reliability of the true boundary position of the object identified in Step S104 (Step S105). For example, the calculation section 15 may determine the reliability in accordance with the distance to the true boundary position of the object identified from the selected pixel 30S. In that case, it may be determined that a closer distance from the selected pixel 30S indicates higher reliability of the identified true boundary position of the object. In addition, for example, the calculation section 15 may determine the reliability on the basis of the difference between pixel values of the pixels 30a and 30b constituting a boundary pixel pair including a candidate pixel used for identifying the true boundary position of the object. In that case, it may be determined that a larger difference between pixel values indicates higher reliability of the identified true boundary position of the object. Note, however, that these methods are not limitations. The reliability of the identified true boundary position of the object may be determined by various methods.

(Replacement Processing S107)

When determining that the reliability of the identified true boundary position of the object is high (YES in Step S106), the calculation section 15 executes pixel value replacement processing on a line to be processed (Step S107), and proceeds to Step S108. In contrast, when determining that the reliability of the identified true boundary position of the object is not high (NO in Step S106), the calculation section 15 does not perform the pixel value replacement processing (Step S107), and proceeds to Step S108.

In the pixel value replacement processing, the calculation section 15 corrects a pixel value of a pixel 30 in a line different from a line including two strip regions 142 adjacent in the first scanning direction on the basis of a pixel value of one of two pixels 30 sandwiching a boundary formed by the two strip regions 142.

Specifically, the calculation section 15 replaces a pixel value of a pixel 30 located on the straight line identified as the true boundary position of the object and on a predetermined side of the straight line among pixels 30 included in a strip region 142 including a selected pixel 30S with a non-saturated pixel value. For example, in the example described with reference to FIGS. 11 to 13, the true boundary position of the object is located on the right side of the selected pixel 30S, so that the calculation section 15 replaces a pixel value of a pixel 30 located on the straight line identified as the true boundary position of the object and on the right side of the straight line with a non-saturated pixel value. Incidentally, various pixel values may be used as the non-saturated pixel value. The various pixel values include a pixel value prepared in advance, a pixel value linearly interpolated on the basis of the position of a candidate pixel used for drawing a straight line determined as the true boundary position of the object and the pixel value of the candidate pixel, and a pixel value of a non-saturated pixel 30 closest to a pixel 30 to be replaced.

(End Processing S108)

Thereafter, the calculation section 15 determines whether or not all pixels in the depth image have been selected in Step S101 (Step S108). When all the pixels have been selected (NO in Step S108), the calculation section 15 ends the operation. In contrast, when there is an unselected pixel (YES in Step S108), the calculation section 15 returns to Step S101, selects the unselected pixel, and executes the subsequent operation.

1.12 Conclusion

As described above, in the embodiment, when two pixels sandwiching a boundary (first boundary) formed by a strip region (first strip region) including a pixel 30 selected from a depth image and a second strip region adjacent to the first strip region satisfy a first condition that both pixel values of the two pixels are equal to or more than a preset first threshold and a second condition that the difference between the pixel values of the two pixels is equal to or less than a preset second threshold, and satisfy a third condition that both pixel values of two pixels sandwiching a second boundary formed by a third strip region adjacent to the first strip region from an opposite side of the second strip region and the first strip region are equal to or less than a preset third threshold or the difference between the pixel values is equal to or more than a preset fourth threshold, a pixel value of a selected pixel is corrected on the basis of a pixel value of one of two pixels sandwiching a third boundary formed by two strip regions adjacent in a line different from a line including the selected pixel.

In that case, a pixel value of a pixel adjacent to the third boundary in a fourth strip region that forms the third boundary satisfying the first condition and the second condition and a fourth boundary satisfying the third condition in a line different from a line including the selected pixel is identified. The true boundary position of the object within a distance measurement range is identified on the basis of the pixel value of the identified pixel. The pixel value of the selected pixel is corrected on the basis of the identified true boundary position of the object.

Then, the true boundary position of the object within the distance measurement range is identified on the basis of a pixel value of a pixel having the shortest distance to a pixel selected from a straight line among one or more pixels identified in a pixel line different from the line including the selected pixel. The straight line passes through each of the one or more pixels, and is parallel to the second scanning direction.

As described above, according to the embodiment, a boundary pixel pair in which the boundary matches the true boundary position of the object can be identified by shifting an offset (phase) of segmentation of a strip region 142 in the scanning direction (in example, first scanning direction) for each line. The true boundary position of the object can thus be more accurately identified. This enables the contour of the object to be more accurately identified. A decrease in distance measurement accuracy can thus be inhibited.

2. Second Embodiment

Next, a second embodiment will be described in detail below with reference to the drawings. Incidentally, in the following description, configurations, operations, and effects similar to those of the above-described embodiment or variations thereof are cited, and redundant description thereof will be omitted.

In the embodiment, a distance measuring device (TOF sensor) (see FIG. 1), an optical system (see FIG. 2), a light receiving section (see FIGS. 3 and 4), a strip region (see FIG. 5), the configuration and operation of a SPAD pixel (see FIGS. 6 and 7), a SPAD addition section (see FIG. 7), a sampling cycle, a method of identifying a true boundary position of an object (see FIG. 9), an example of a contour correction operation (see FIGS. 10 to 13), and the like may be similar to those in the above-described first embodiment and the variations thereof, so that detailed descriptions thereof are omitted here.

Note, however, that the embodiment is different from the above-described embodiment and the variations thereof at least in that an offset set in each line changes along a time axis.

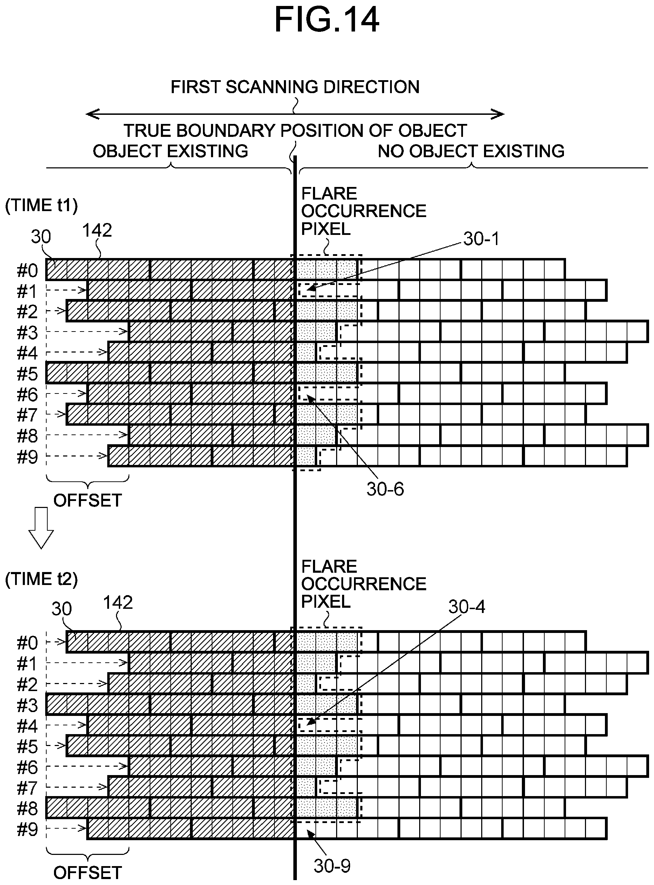

FIG. 14 depicts an example of an offset allocated to each line for each time according to the embodiment. Incidentally, FIG. 14 depicts a part (10 lines of lines #1 to #9) of a depth image on the basis of a histogram created by scanning the inside of the view angle SR including a highly reflective object for each line in the first scanning direction.

As depicted in FIG. 14, in the embodiment, a pattern of offsets allocated to five lines of each of lines #0 to #4 and lines #5 to #9 is (0, 2, 1, 4, 3) at time t1, whereas a pattern of offsets allocated to the five lines of each of the lines #0 to #4 and the lines #5 to #9 is (1, 4, 3, 0, 2) at time t2 next to the time t1. Incidentally, in a time from the time t1 to the time t2, one depth image may be generated. That is, a cycle of switching the offset may be the same as a frame rate of the depth image. Note, however, that this is not a limitation. For example, the cycle of switching the offset may be varied by an integral multiple of the frame rate of the depth image.

In addition, although, in the example, two offset patterns are depicted, the number of patterns of switched offsets is not limited to two. Three or more patterns may be provided. Further, the offsets may be used in a cyclic order or a random order. Further, the offsets may be switched by switching timing when the control section 11 (see FIG. 1) starts to read out a pixel value from each line in the light receiving section 14 (for example, timing of vertical synchronization signal).

As described above, a boundary pixel pair in which the boundary matches the true boundary position of the object can be switched by switching the offset of each line for each of one or several frames. That is, the true boundary position of the object can be identified by using different boundary pixel pairs for each of one or several frames.

Then, information on the true boundary position of the object is held for a plurality of frames. The true boundary position of the object in a current frame can be identified in consideration of the held true boundary position of the object. This enables the true boundary position of the object to be more accurately identified. A decrease in distance measurement accuracy can thus be further inhibited.

In addition, the offset of each line is switched for each of one or several frames, which can reduce long and consecutive selection of the same boundary pixel pair as the boundary pixel pair in which the boundary matches the true boundary position of the object. A resolution in a longitudinal direction (second scanning direction) can be enhanced.

Other configurations, operations, and effects may be similar to those of the above-described embodiment or the variations thereof, so that detailed description thereof is omitted here.

3. Third Embodiment

Next, a third embodiment will be described in detail below with reference to the drawings. Incidentally, in the following description, configurations, operations, and effects similar to those of the above-described embodiment or variations thereof are cited, and redundant description thereof will be omitted.

In the embodiment, a distance measuring device (TOF sensor) (see FIG. 1), an optical system (see FIG. 2), a light receiving section (see FIGS. 3 and 4), a strip region (see FIG. 5), the configuration and operation of a SPAD pixel (see FIGS. 6 and 7), a SPAD addition section (see FIG. 7), a sampling cycle, a method of identifying a true boundary position of an object (see FIG. 9), an example of a contour correction operation (see FIGS. 10 to 13), and the like may be similar to those in the above-described first embodiment and the variations thereof, so that detailed descriptions thereof are omitted here.

Note, however, that the embodiment is different from the above-described embodiment and the variations thereof in that, as in the second embodiment, when information on the true boundary position of the object is held for a plurality of frames and the true boundary position of the object in a current frame is identified in consideration of the held true boundary position of the object, movement of the true boundary position of the object between frames and an amount of the movement are detected, and the true boundary position of the object in the current frame is identified on the basis of the result.

For example, the movement of the true boundary position of the object between frames and the amount of the movement may be detected by calculating an optical flow between frames using a depth image acquired by the TOF sensor 1, may be detected by calculating the optical flow between frames using a monochrome image or a color image acquired from an image sensor provided together with the TOF sensor 1, or may be detected by calculating the optical flow between frames using a monochrome image or a color image acquired by using the TOF sensor 1 in which a gradation pixel and a SPAD pixel are mixed in a pixel array section 141A as depicted with reference to FIG. 4 in a variation of the first embodiment. Note, however, that these methods are not limitations. The movement of the true boundary position of the object between frames and the amount of the movement may be detected on the basis of an optical flow calculated by various methods. In that case, the calculation section 15 may calculate the optical flow.

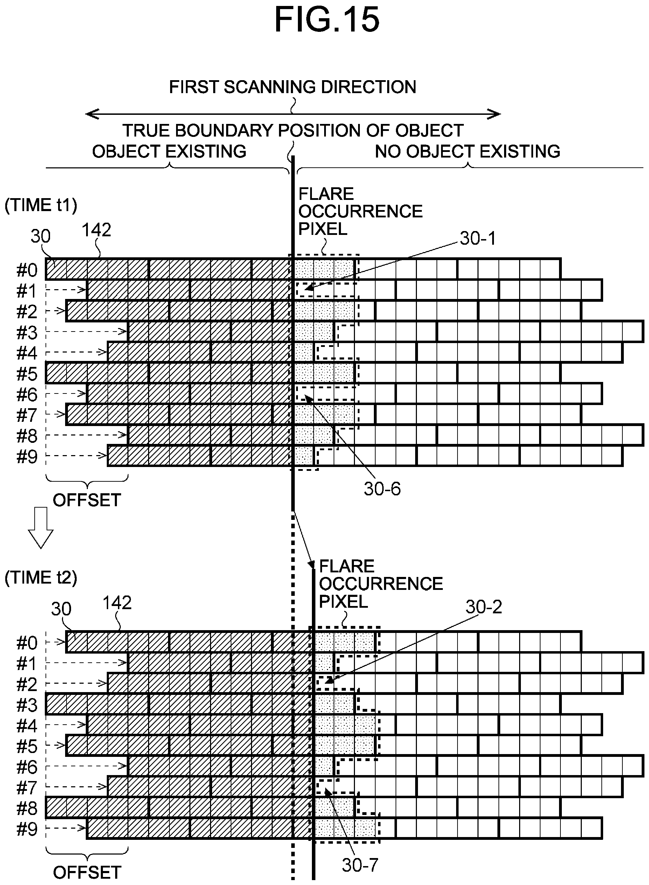

FIG. 15 depicts a method of adjusting the true boundary position of the object on the basis of an optical flow calculated from a past frame. As depicted in FIG. 15, when movement of the object to the right side from the time t1 to the time t2 is detected by the optical flow calculated from the past frame, the calculation section 15 updates information on the true boundary position of the object for a plurality of past frames on the basis of the optical flow. Then, the final true boundary position of the object is identified from the updated true boundary position of the object and the true boundary position of the object identified by the above-describe method from the current frame.

As described above, the true boundary position of the object can be identified more accurately by adding an optical flow of the object calculated from a past frame. This can further inhibit a decrease in distance measurement accuracy.

Other configurations, operations, and effects may be similar to those of the above-described embodiment or the variations thereof, so that detailed description thereof is omitted here.

4. Hardware Configuration

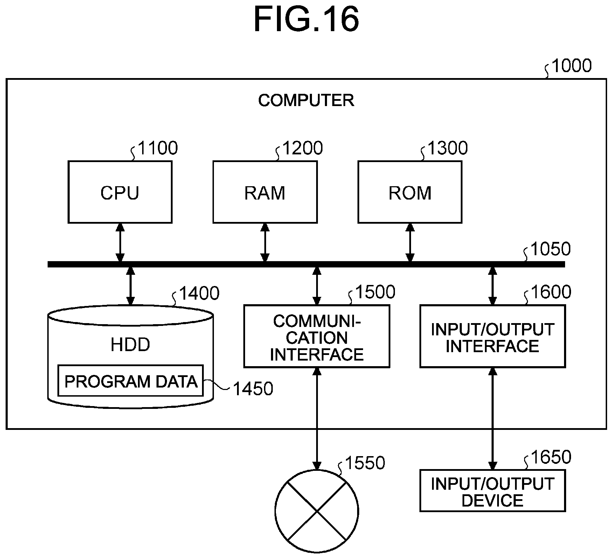

A computer 1000 having a configuration as described in FIG. 16 can implement an information processing function of the TOF sensor 1 according to the above-described embodiments and variations and application examples thereof. FIG. 16 is a hardware configuration diagram depicting an example of the computer 1000 that implements the information processing function of the TOF sensor 1. The computer 1000 includes a CPU 1100, a RAM 1200, a read only memory (ROM) 1300, a hard disk drive (HDD) 1400, a communication interface 1500, and an input/output interface 1600. Sections of the computer 1000 are connected by a bus 1050.

The CPU 1100 operates on the basis of a program stored in the ROM 1300 or the HDD 1400, and controls each section. For example, the CPU 1100 develops the program stored in the ROM 1300 or the HDD 1400 on the RAM 1200, and executes processing corresponding to various programs.

The ROM 1300 stores a boot program of a basic input output system (BIOS) and the like executed by the CPU 1100 at the time when the computer 1000 is started, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program for executing each operation according to the present disclosure. The program is an example of program data 1450.

The communication interface 1500 is used for connecting the computer 1000 with an external network 1550 (e.g., Internet). For example, the CPU 1100 receives data from another piece of equipment and transmits data generated by the CPU 1100 to another piece of equipment via the communication interface 1500.

The input/output interface 1600 has a configuration including the above-described I/F section 18, and connects an input/output device 1650 with the computer 1000. For example, the CPU 1100 receives data from an input device such as a keyboard and a mouse via the input/output interface 1600. In addition, the CPU 1100 transmits data to an output device such as a display, a speaker, and a printer via the input/output interface 1600. In addition, the input/output interface 1600 may function as a medium interface that reads a program and the like recorded in a predetermined recording medium. The medium includes, for example, an optical recording medium such as a digital versatile disc (DVD) and a phase change rewritable disk (PD), a magneto-optical recording medium such as a magneto-optical disk (MO), a tape medium, a magnetic recording medium, and a semiconductor memory.

For example, when the computer 1000 functions as an information processing section of the TOF sensor 1 according to the above-described embodiment, the CPU 1100 of the computer 1000 implements the information processing function of the TOF sensor 1 by executing a program loaded on the RAM 1200. In addition, the HDD 1400 stores a program and the like according to the present disclosure. Incidentally, the CPU 1100 reads the program data 1450 from the HDD 1400 and executes the program data 1450. In another example, the CPU 1100 may acquire these programs from another device via the external network 1550.

5. Example of Application to Mobile Body

The technology according to the present disclosure (present technology) can be applied to various products. For example, the technology according to the present disclosure may be implemented as a device mounted in a mobile body of any type of an automobile, an electric vehicle, a hybrid electric vehicle, a motorcycle, a bicycle, a personal mobility, an airplane, a drone, a ship, a robot, and the like.

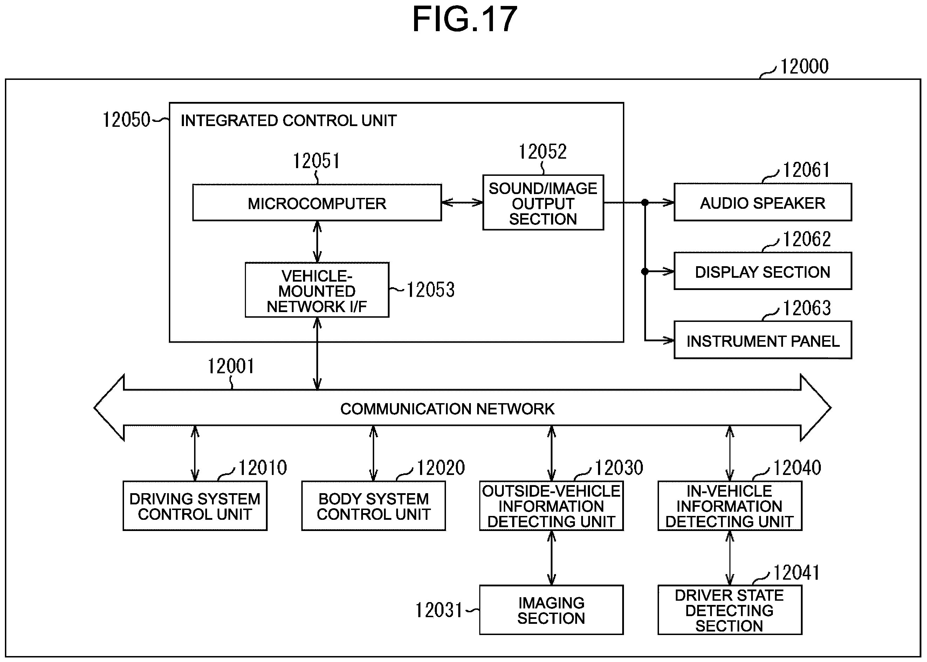

FIG. 17 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 17, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 17, an audio speaker 12061, a display section 12062, and an instrument panel 12063 are illustrated as the output device. The display section 12062 may, for example, include at least one of an on-board display and a head-up display.

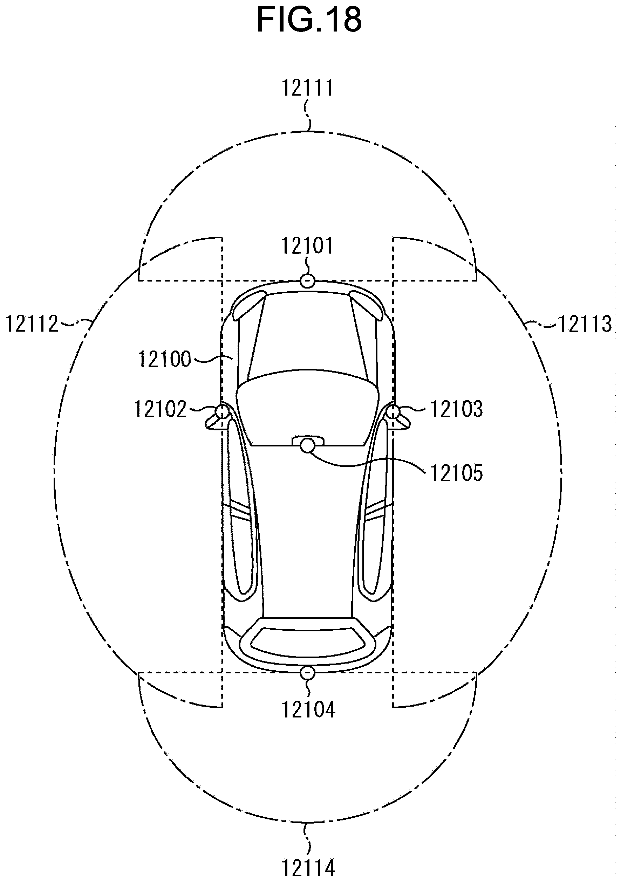

FIG. 18 is a diagram depicting an example of the installation position of the imaging section 12031.

In FIG. 18, a vehicle 12100 includes imaging sections 12101, 12102, 12103, 12104, and 12105 serving as the imaging sections 12031.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The image of the front acquired by the imaging sections 12101 and 12105 are used mainly to detect a preceding vehicle, a pedestrian, an obstacle, a signal, a traffic sign, a lane, or the like.

Incidentally, FIG. 18 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to, for example, the imaging section 12031 among the above-described configurations. The technology according to the present disclosure may be mounted in the vehicle 12100 as, for example, the imaging sections 12101, 12102, 12103, 12104, and 12105 in FIG. 18. A more accurate depth image can be acquired by applying the technology according to the present disclosure to the imaging sections 12101, 12102, 12103, 12104, and 12105, so that control accuracy in automated driving and driving assistance can be enhanced.

Although the embodiments of the present disclosure have been described above, the technical scope of the present disclosure is not limited to the above-described embodiments as it is, and various modifications can be made without departing from the gist of the present disclosure. In addition, components of different embodiments and variations may be appropriately combined.

In addition, the effects in each embodiment described in the present specification are merely examples and not limitations. Other effects may be exhibited.

Incidentally, the present technology can also have the configurations as follows.

(1) A distance measuring device comprising:

a distance measuring section that measures depth information indicating a distance to an object within a distance measurement range expanding in a first direction and a second direction perpendicular to the first direction for each of strip regions including a plurality of pixels arranged at least in the first direction; and

a calculation section that generates a depth image of the distance measurement range on a basis of the depth information for each of the pixels measured for each of the strip regions;

wherein positions of boundaries between strip regions adjacent in the first direction are different between a plurality of pixel lines extending in the first direction and arranged in the second direction, and

the calculation section corrects a pixel value of a pixel in a pixel line different from a pixel line including two strip regions adjacent in the first direction in the plurality of pixel lines on a basis of a pixel value of one of two pixels sandwiching a boundary formed by the two strip regions.

(2) The distance measuring device according to (1),

wherein the distance measuring section measures depth information indicating a distance to an object within the distance measurement range for each of the pixels by scanning the distance measurement range in the strip region with the first direction as a main scanning direction and the second direction as a sub-scanning direction.

(3) The distance measuring device according to (2),

wherein the distance measuring section sets an offset from a reference position in the first direction having a different value for each of the plurality of pixel lines so that a position of a boundary between the strip regions adjacent in the first direction is different between the plurality of pixel lines.

(4) The distance measuring device according to (3),

wherein the distance measuring section sets the offset that cyclically changes as per each predetermined number of pixel lines for the plurality of pixel lines.

(5) The distance measuring device according to (3) or (4),

wherein the distance measuring section switches the offset for each frame of the depth image.

(6) The distance measuring device according to any one of (1) to (5),

wherein the calculation section selects a first pixel which is one of pixels included in the depth image, and when two pixels sandwiching a first boundary formed by a first strip region including the first pixel and a second strip region adjacent to the first strip region satisfy a first condition that both pixel values of the two pixels are equal to or more than a preset first threshold and a second condition that a difference between the pixel values of the two pixels is equal to or less than a preset second threshold, and satisfy a third condition that both pixel values of two pixels sandwiching a second boundary formed by a third strip region adjacent to the first strip region from an opposite side of the second strip region and the first strip region are equal to or less than a preset third threshold or a difference between the pixel values is equal to or more than a preset fourth threshold, a pixel value of the first pixel is corrected on a basis of a pixel value of a second pixel which is one of two pixels sandwiching a third boundary formed by two strip regions adjacent in a pixel line different from a pixel line including the first pixel.

(7) The distance measuring device according to (6),

wherein the calculation section identifies a pixel value of the second pixel adjacent to the third boundary in a fourth strip region that forms the third boundary satisfying the first condition and the second condition and a fourth boundary satisfying the third condition in a pixel line different from a pixel line including the first pixel, identifies a true boundary position of an object within the distance measurement range on a basis of the pixel value of the second pixel that has been identified, and corrects a pixel value of the first pixel on a basis of the true boundary position that has been identified.

(8) The distance measuring device according to (7),

wherein the calculation section identifies a true boundary position of an object within the distance measurement range on a basis of a pixel value of a second pixel having a shortest distance to the first pixel from a straight line among one or more second pixels identified in a pixel line different from a pixel line including the first pixel, the straight line passing through each of the one or more second pixels and being parallel to the second direction.

(9) The distance measuring device according to (7) or (8),

wherein the calculation section identifies a true boundary position of an object within the distance measurement range further on a basis of the true boundary position identified from a depth image of one or more past frames.

(10) The distance measuring device according to any one of (7) to (9),

wherein the calculation section calculates an optical flow of an object within the distance measurement range on a basis of image data obtained by an imaging section that images an inside of a view angle at least partially overlapping the distance measurement range, and identifies a true boundary position of an object within the distance measurement range further on a basis of the optical flow that has been calculated.

(11) The distance measuring device according to any one of (6) to (10),

wherein the calculation section determines whether or not to correct a pixel value of the first pixel on a basis of a distance from a straight line passing through the second pixel and parallel to the second direction to the first pixel.

(12) The distance measuring device according to any one of (1) to (11),

wherein the distance measuring section includes:

a light emitting section that emits light;
a light receiving section that includes the plurality of pixels arranged in the first direction; and
a scanning section that scans the distance measurement range by repeating, in the second direction, an operation of scanning a view angle of the light receiving section for each of one or more pixel lines in the first direction,
wherein the calculation section generates the depth image on a basis of a time from when the light emitting section emits light to when each of the plurality of pixels detects incidence of light.

(13) A distance measuring method comprising:

measuring depth information indicating a distance to an object within a distance measurement range expanding in a first direction and a second direction perpendicular to the first direction for each of strip regions including a plurality of pixels arranged at least in the first direction;
generating a depth image of the distance measurement range on a basis of the depth information for each of the pixels measured for each of the strip regions; and

correcting a pixel value of a pixel in a pixel line different from a pixel line including two strip regions adjacent in the first direction on a basis of a pixel value of one of two pixels sandwiching a boundary formed by the two strip regions,

wherein positions of boundaries between strip regions adjacent in the first direction are different between a plurality of pixel lines extending in the first direction and arranged in the second direction.

Reference Signs List

1 DISTANCE MEASURING DEVICE (TOF SENSOR)
11 CONTROL SECTION
13 LIGHT EMITTING SECTION
14 LIGHT RECEIVING SECTION
15 CALCULATION SECTION
19 EXTERNAL I/F
20 SPAD PIXEL
21 PHOTODIODE
22 READOUT CIRCUIT
23 QUENCH RESISTOR
24 SELECTION TRANSISTOR
25 DIGITAL CONVERTER
26 INVERTER
30, 30A to 30E MACRO PIXEL
30-1, 30-4, 30-6, 30-7, 30-9, 30a, 30b PIXEL
30b1, 30b3, 30b4, 30b6, 30b8, 30b9 CANDIDATE PIXEL
30S SELECTED PIXEL
40 SPAD ADDITION SECTION
41 PULSE SHAPING SECTION
42 LIGHT RECEPTION NUMBER COUNTING SECTION
80 HOST
90 OBJECT
131 LIGHT SOURCE
132 COLLIMATOR LENS
133 HALF MIRROR
134 DRIVING SECTION
135 GALVANOMETER MIRROR
141, 141A PIXEL ARRAY SECTION
142 STRIP REGION
143 TIMING CONTROL CIRCUIT
144 DRIVE CIRCUIT
145 OUTPUT CIRCUIT
146 LIGHT RECEIVING LENS
251 RESISTOR
252, 262 NMOS TRANSISTOR
261 PMOS TRANSISTOR
AR DISTANCE MEASUREMENT RANGE
L1 LASER BEAM
L2 REFLECTED LIGHT
R01, R02, R11, R12, R21, R22, R31, R32, R41, R42, R51, R52, R61, R62, R71, R72, R81, R82, R91, R92 BOUNDARY PIXEL PAIR
SR VIEW ANGLE

**Claims**

1. A distance measuring device comprising:

a distance measuring section that measures depth information indicating a distance to an object within a distance measurement range expanding in a first direction and a second direction perpendicular to the first direction for each of strip regions including a plurality of pixels arranged at least in the first direction; and

a calculation section that generates a depth image of the distance measurement range on a basis of the depth information for each of the pixels measured for each of the strip regions;

wherein positions of boundaries between strip regions adjacent in the first direction are different between a plurality of pixel lines extending in the first direction and arranged in the second direction, and

the calculation section corrects a pixel value of a pixel in a pixel line different from a pixel line including two strip regions adjacent in the first direction in the plurality of pixel lines on a basis of a pixel value of one of two pixels sandwiching a boundary formed by the two strip regions.

2. The distance measuring device according to claim 1,
wherein the distance measuring section measures depth information indicating a distance to an object within the distance measurement range for each of the pixels by scanning the distance measurement range in the strip region with the first direction as a main scanning direction and the second direction as a sub-scanning direction.

3. The distance measuring device according to claim 2,
wherein the distance measuring section sets an offset from a reference position in the first direction having a different value for each of the plurality of pixel lines so that a position of a boundary between the strip regions adjacent in the first direction is different between the plurality of pixel lines.

4. The distance measuring device according to claim 3,
wherein the distance measuring section sets the offset that cyclically changes as per each predetermined number of pixel lines for the plurality of pixel lines.

5. The distance measuring device according to claim 3,
wherein the distance measuring section switches the offset for each frame of the depth image.

6. The distance measuring device according to claim 1,
wherein the calculation section selects a first pixel which is one of pixels included in the depth image, and when two pixels sandwiching a first boundary formed by a first strip region including the first pixel and a second strip region adjacent to the first strip region satisfy a first condition that both pixel values of the two pixels are equal to or more than a preset first threshold and a second condition that a difference between the pixel values of the two pixels is equal to or less than a preset second threshold, and satisfy a third condition that both pixel values of two pixels sandwiching a second boundary formed by a third strip region adjacent to the first strip region from an opposite side of the second strip region and the first strip region are equal to or less than a preset third threshold or a difference between the pixel values is equal to or more than a preset fourth threshold, a pixel value of the first pixel is corrected on a basis of a pixel value of a second pixel which is one of two pixels sandwiching a third boundary formed by two strip regions adjacent in a pixel line different from a pixel line including the first pixel.

7. The distance measuring device according to claim 6,
wherein the calculation section identifies a pixel value of the second pixel adjacent to the third boundary in a fourth strip region that forms the third boundary satisfying the first condition and the second condition and a fourth boundary satisfying the third condition in a pixel line different from a pixel line including the first pixel, identifies a true boundary position of an object within the distance measurement range on a basis of the pixel value of the second pixel that has been identified, and corrects a pixel value of the first pixel on a basis of the true boundary position that has been identified.

8. The distance measuring device according to claim 7,
wherein the calculation section identifies a true boundary position of an object within the distance measurement range on a basis of a pixel value of a second pixel having a shortest distance to the first pixel from a straight line among one or more second pixels identified in a pixel line different from a pixel line including the first pixel, the straight line passing through each of the one or more second pixels and being parallel to the second direction.

9. The distance measuring device according to claim 7,
wherein the calculation section identifies a true boundary position of an object within the distance measurement range further on a basis of the true boundary position identified from a depth image of one or more past frames.

**10.** The distance measuring device according to claim 7,
wherein the calculation section calculates an optical flow of an object within the distance measurement range on a basis of image data obtained by an imaging section that images an inside of a view angle at least partially overlapping the distance measurement range, and identifies a true boundary position of an object within the distance measurement range further on a basis of the optical flow that has been calculated.

**11.** The distance measuring device according to claim 6,
wherein the calculation section determines whether or not to correct a pixel value of the first pixel on a basis of a distance from a straight line passing through the second pixel and parallel to the second direction to the first pixel.

**12.** The distance measuring device according to claim 1,
wherein the distance measuring section includes:

a light emitting section that emits light;
a light receiving section that includes the plurality of pixels arranged in the first direction; and
a scanning section that scans the distance measurement range by repeating, in the second direction, an operation of scanning a view angle of the light receiving section for each of one or more pixel lines in the first direction,
wherein the calculation section generates the depth image on a basis of a time from when the light emitting section emits light to when each of the plurality of pixels detects incidence of light.

**13.** A distance measuring method comprising:

measuring depth information indicating a distance to an object within a distance measurement range expanding in a first direction and a second direction perpendicular to the first direction for each of strip regions including a plurality of pixels arranged at least in the first direction;
generating a depth image of the distance measurement range on a basis of the depth information for each of the pixels measured for each of the strip regions; and
correcting a pixel value of a pixel in a pixel line different from a pixel line including two strip regions adjacent in the first direction on a basis of a pixel value of one of two pixels sandwiching a boundary formed by the two strip regions,
wherein positions of boundaries between strip regions adjacent in the first direction are different between a plurality of pixel lines extending in the first direction and arranged in the second direction.

# FIG.1

AMBIENT LIGHT

ToF SENSOR — 1

14 LIGHT RECEIVING SECTION

15 CALCULATION SECTION

19 EXTERNAL I/F

80 HOST

13 LIGHT EMITTING SECTION

11 CONTROL SECTION

90

L2

L1

L

EP 4 478 085 A1

# FIG.2

# FIG.3

144

DRIVE CIRCUIT

14

143

TIMING CONTROL CIRCUIT

20

PIXEL ARRAY SECTION

145

OUTPUT CIRCUIT

141

# FIG.4

141A

20R  20G  ...

20B  20

PIXEL ARRAY SECTION

20  20B

... 20G  20R

# FIG.5

142

20  30A  30B  30C  30D  30E

# FIG.6

V_SPAD    VDD    VDD

22    21

251

N1    23    N2    252    261

V_QCH    N3    262    27

V_SEL    24    25    26    V_OUT

20

# FIG.7

| MACRO PIXEL | | PULSE SHAPING SECTION | LIGHT RECEPTION NUMBER COUNTING SECTION |

30    145    41    42    40

# FIG.8

FIRST SCANNING DIRECTION

TRUE BOUNDARY POSITION OF OBJECT

OBJECT EXISTING                NO OBJECT EXISTING

FLARE OCCURRENCE PIXEL

30   142

#0
#1
#2
#3
#4
#5
#6
#7
#8
#9

# FIG.9

FIRST SCANNING DIRECTION

TRUE BOUNDARY POSITION OF OBJECT

OBJECT EXISTING                NO OBJECT EXISTING

FLARE OCCURRENCE PIXEL
                                          30-1

30   142

#0
#1
#2
#3
#4
#5
#6
#7
#8
#9

OFFSET

30-6

# FIG.10

START

SELECT UNSELECTED PIXEL — S101

PIXEL FACING BOUNDARY WITH STRIP REGION? — S102
NO →
YES ↓

HAS FLARE OCCURRED? — S103
YES →
NO ↓

PREDICT TRUE BOUNDARY POSITION WITHIN STRIP REGION FROM ADJACENT SURROUNDING REGION BOUNDARY — S104

DETERMINE RELIABILITY OF PREDICTED BOUNDARY POSITION — S105

IS RELIABILITY HIGH? — S106
NO →
YES ↓

REPLACEMENT PROCESSING — S107

IS THERE UNSELECTED PIXEL? — S108
YES
NO ↓

END

# FIG.11

# FIG.12

FIRST SCANNING DIRECTION

TRUE BOUNDARY POSITION OF OBJECT

OBJECT EXISTING      NO OBJECT EXISTING

30   142     R51    R12     R32

#0
#1
#2
#3
#4
#5
#6
#7
#8
#9

30S
(30b)   R62     R92    R42

R82

29

# FIG.13

FIRST SCANNING DIRECTION

TRUE BOUNDARY POSITION OF OBJECT

OBJECT EXISTING                                    NO OBJECT EXISTING

30    142          30S              30b1      30b3

#0
#1
#2
#3
#4
#5
#6
#7
#8
#9

30b6        30b9      30b4

30b8

# FIG.14

FIRST SCANNING DIRECTION

TRUE BOUNDARY POSITION OF OBJECT

OBJECT EXISTING                    NO OBJECT EXISTING

(TIME t1)

FLARE OCCURRENCE PIXEL

30    142                                    30-1

#0
#1
#2
#3
#4
#5
#6
#7
#8
#9

30-6

OFFSET

(TIME t2)

FLARE OCCURRENCE PIXEL

30    142                                    30-4

#0
#1
#2
#3
#4
#5
#6
#7
#8
#9

30-9

OFFSET

# FIG.15

FIRST SCANNING DIRECTION

TRUE BOUNDARY POSITION OF OBJECT

OBJECT EXISTING    NO OBJECT EXISTING

(TIME t1)

FLARE
OCCURRENCE
PIXEL

30    142    30-1

#0
#1
#2
#3
#4
#5
#6
#7
#8
#9

30-6

OFFSET

(TIME t2)

FLARE
OCCURRENCE
PIXEL

30    142    30-2

#0
#1
#2
#3
#4
#5
#6
#7
#8
#9

30-7

OFFSET

# FIG.16

COMPUTER — 1000

CPU — 1100

RAM — 1200

ROM — 1300

— 1050

HDD — 1400

PROGRAM DATA — 1450

COMMUNI-CATION INTERFACE — 1500

INPUT/OUTPUT INTERFACE — 1600

— 1550

INPUT/OUTPUT DEVICE — 1650

# FIG.17

INTEGRATED CONTROL UNIT 12050

12051 MICROCOMPUTER

12052 SOUND/IMAGE OUTPUT SECTION

VEHICLE-MOUNTED NETWORK I/F 12053

12061 AUDIO SPEAKER

12062 DISPLAY SECTION

12063 INSTRUMENT PANEL

12001 COMMUNICATION NETWORK

12010 DRIVING SYSTEM CONTROL UNIT

12020 BODY SYSTEM CONTROL UNIT

12030 OUTSIDE-VEHICLE INFORMATION DETECTING UNIT

12040 IN-VEHICLE INFORMATION DETECTING UNIT

12031 IMAGING SECTION

12041 DRIVER STATE DETECTING SECTION

12000

EP 4 478 085 A1

# FIG.18

<table>
<tr><td colspan="2">**INTERNATIONAL SEARCH REPORT**</td><td colspan="2">International application No.<br><br>**PCT/JP2023/002434**</td></tr>
</table>

**A. CLASSIFICATION OF SUBJECT MATTER**

*G01S 7/4863*(2020.01)i; *G01C 3/06*(2006.01)i; *G01S 17/89*(2020.01)i; *G01S 17/10*(2020.01)n
FI: G01S7/4863; G01C3/06 120Q; G01C3/06 140; G01S17/89; G01S17/10

According to International Patent Classification (IPC) or to both national classification and IPC

**B. FIELDS SEARCHED**

Minimum documentation searched (classification system followed by classification symbols)

G01S7/48 - G01S7/51; G01S17/00 - G01S17/95; G01C3/00 - G01C3/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-50950 A (SONY SEMICONDUCTOR SOLUTIONS CORP) 01 April 2021 (2021-04-01)<br>    entire text, all drawings | 1-13 |
| A | WO 2014/207983 A1 (PANASONIC INTELLECTUAL PROPERTY MANAGEMENT CO., LTD.) 31 December 2014 (2014-12-31)<br>    entire text, all drawings | 1-13 |
| A | JP 2021-152536 A (DENSO CORP) 30 September 2021 (2021-09-30)<br>    entire text, all drawings | 1-13 |
| A | US 2020/0072946 A1 (SENSE PHOTONICS, INC.) 05 March 2020 (2020-03-05)<br>    entire text, all drawings | 1-13 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/002434**

| Patent document cited in search report | | | Publication date (day/month/year) | Patent family member(s) | | | Publication date (day/month/year) |
|---|---|---|---|---|---|---|---|
| JP | 2021-50950 | A | 01 April 2021 | US | 2022/0373659 | A1 | |
| | | | | entire text, all drawings | | | |
| | | | | WO | 2021/059682 | A1 | |
| WO | 2014/207983 | A1 | 31 December 2014 | US | 2016/0178734 | A1 | |
| | | | | entire text, all drawings | | | |
| | | | | EP | 3015882 | A1 | |
| JP | 2021-152536 | A | 30 September 2021 | WO | 2021/193289 | A1 | |
| | | | | entire text, all drawings | | | |
| | | | | CN | 115380222 | A | |
| US | 2020/0072946 | A1 | 05 March 2020 | WO | 2020/047248 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021128084 A
- JP 2004271291 A
- JP H8287736 A